# EUROPEAN PATENT APPLICATION

(11) **EP 2 447 873 A1**
(43) Date of publication of application: **02.05.2012**
(21) Application number: 10306181.8
(22) Date of filing: 27.10.2010
(51) Int. Cl.: G06F 21/00

(54) **A method and a corresponding device for accessing an application**

(71) Applicant: Gemalto SA, 92190 Meudon (FR)
(72) Inventor: Maunier, Gérald, 13011 Marseille (FR); Biton, Philippe, 13400, Aubagne (FR)

(57) **Abstract**

The invention relates to a method (20) for accessing an application. A token (12) comprises at least one application that is executable by a device (10). The token is coupled to the device.

According to the invention, the method comprises the following steps:
- the token sends (22) to the device identification data relating to the application,
- the device analyses (24) whether the identification data relating to the application is included within a list of at least one authorized application,
- only if the identification data relating to the application is included within a list of at least one authorized application, then the device executes (214) the application.

The invention also relates to a corresponding device.

## Description

### Field of the invention:

The invention relates, in a general manner, to a method for accessing an application.

Furthermore, the invention also pertains to a device for accessing an application.

### State of the art:

A known solution for accessing an application is based upon a use of a removable storage medium, such as a Universal Serial Bus (or USB) drive, that stores an application. Once the removable storage medium is plugged onto a host Personal Computer (or PC), this latter executes automatically the application, also termed "autorun" functionality of the PC.

However, when the application is a fake application, a malicious application, a virus application or a malware, the PC executes it and gets infected further to its execution.

Such an infection may either cause a working problem(s) of the PC or generate a complete stopping of the PC working. A PC user or a computer expert has to be involved, so as to attempt to retrieve a normal working of the PC.

Thus, there is a need to avoid an execution of an application that provokes an undesired PC working.

### Summary of the invention:

The invention proposes a solution for satisfying the just hereinabove specified need by providing a method for accessing an application. A token comprises at least one application that is executable by a device. The token is coupled to the device.

According to the invention, the method comprises the following steps. The token sends to the device identification data relating to the application. The device analyses whether the identification data relating to the application is included within a list of at least one authorized application. Only if the identification data relating to the application is included within a list of at least one authorized application, then the device executes the application.

The principle of the invention consists in that a device connected to a token that supports an application, firstly recognizes that the application is registered as an authorized one, and secondly executes it only when it is registered.

If the application is not recognized as being authorized by the device, then the device does not execute the concerned application. Thus, no damage is caused by an execution of the not registered application.

It is to be noted that the application may relate to any kind of application.

Thus, the invention solution makes it possible to automatically execute an application that has been previously recognized or identified as being authorized.

Accordingly, contrary to the known solution that is described supra, the proposed solution does only execute an application that is a member of a list of an approved application(s).

The invention solution provides a secure access to an application that is beforehand known to the device.

The invention solution protects a device against any attack by an not recognized application without any user involvement.

The invention solution is therefore secure and user-friendly.

According to a further aspect, the invention is a device for accessing an application. A token is likely to be coupled to the device. The token comprises at least one application that is executable by the device.

According to the invention, the device is adapted to receive identification data relating to the application, analyse whether the identification data relating to the application is included within a list of at least one authorized application, and execute the application, only if the identification data relating to the application is included within a list of at least one authorized application.

It is noteworthy that the device may be any kind of computer that is able to execute an application that is fetched by the device.

### Brief description of the drawings:

Additional features and advantages of the invention will be more clearly understandable after reading a detailed description of one preferred embodiment of the invention, given as one indicative and non-limitative example, in conjunction with the following drawings:
- Figure 1 represents a simplified diagram of one exemplary embodiment of a system comprising a PC and a token connected to the PC, an application being supported by the token, and the PC being adapted to execute, when applicable, automatically and securely the application, according to the invention; and
- Figure 2 illustrates a simplified flow chart of one exemplary embodiment of a method for authorizing or forbidding an execution of the application, the method being implemented by the system of figure 1.

### Detailed description:

Herein under is considered a PC, as an invention device for accessing an application.

Instead of being constituted by a PC, the device may be constituted, for example, by a mobile handset, a mobile telephone, a smart phone, a Personal Digital Assistant (or PDA), a set top box, a desktop computer, a portable computer, a tablet computer, a media player, a Global Positioning System (or GPS) receiver, a netbook and/or any other device able to retrieve an application from a storage medium that supports the application.

Naturally, the herein below described embodiment is only for exemplifying purposes and is not considered to reduce the scope of the present invention.

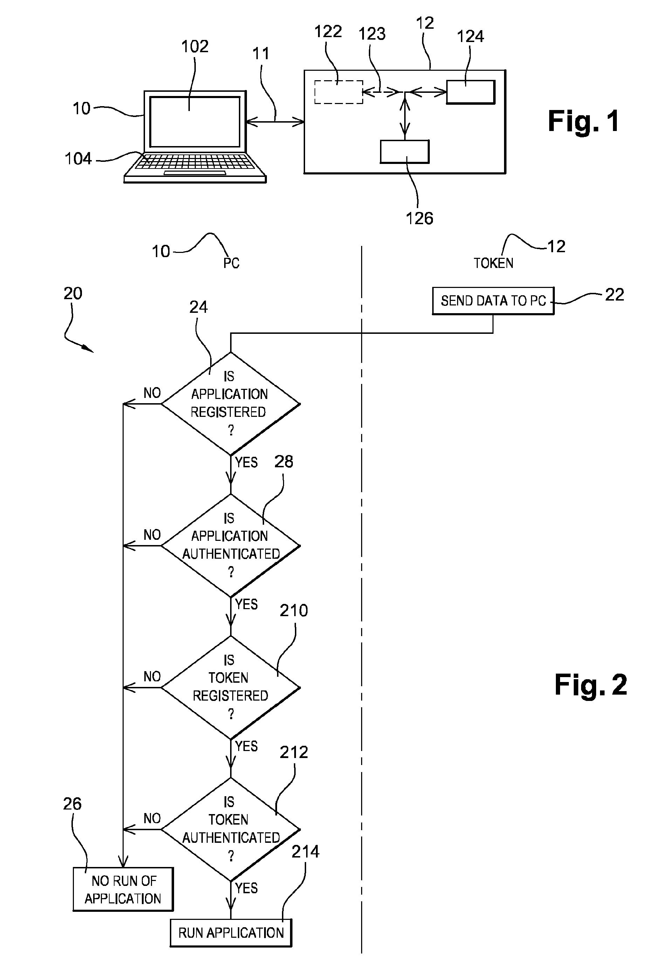

Figure 1 shows schematically a PC 10, as a user terminal, to which a USB type drive 12, as a token, is connected.

For a sake of clarity and conciseness, the USB type drive 12 is termed hereinafter the token 12.

The token 12 is an electronic object.

The token 12 is a removable storage medium that stores an application(s).

According to other examples, the removable storage medium may also be a card, a smart card (i.e. a card with data processing means) or a chip fixed, in a removable manner, to a host device.

According to still another example, the token is replaced by an embedded Secure Element, as a chip that is soldered on a Printed Circuit Board (or PCB) of a host device, like a Trusted Platform Module (or TPM), a Mobile Trusted Module (or MTM) or a Near Field Chip Secure Element. Such a token constitutes a storage medium that is therefore not removable.

A stored application, i.e. executable data, may be executed by a token host computer, and more exactly, a microprocessor of the computer, as means for processing data.

The token 12 is intended to interact with the PC 10.

The token 12 is connected to the PC 10 via a bi-directional communication link 11.

The bi-directional communication link 11 may constitute either a contact link or a contactless link, such as a wireless USB link, a Near Field Communication (or NFC) link, a Bluetooth link, a Wifi link or the like.

The token 12 includes a chip.

The token 12 may be connected to or include an antenna, so as to communicate data, through a short range radiofrequency link 11, with the PC 10.

The token chip includes at least one memory 124, as means for storing one or several applications and other data relating to the stored application(s), and at least one Input/Output (or I/O) interface 126 which are linked together through a bus 123.

The data relating to the stored application(s) may include a certificate originating from a Certification Authority and/or a signature of the application.

The certificate allows proving an origin of the application and/or that the application has not been modified.

The data relating to the stored application(s) may be included within a file. Such a file may be stored within a folder also stored within the token 12.

The token I/O interface 126 is used for receiving data from or sending data to outside, notably the PC 10, through a corresponding PC I/O interface (not represented).

The token I/O interface 126 includes preferably a (possibly wireless) USB type communication channel in compliance with the (possibly wireless) USB standard specifications.

The token I/O interface 126 may comprise other or another communication channel(s), such as an Internet Protocol (or IP) type communication channel(s), a Mass Storage type communication channel(s), an International Organization for Standardization (or ISO) 7816 type communication channel and/or an Application Protocol Data Unit (or APDU) type communication channel.

The token chip may further contain at least one microprocessor 122 (represented by a dotted line), as means for processing data.

The token microprocessor 122 controls and communicates with all the components of the token chip, such as the memory 124 to read it and possibly write into it. The token microprocessor 122 controls a data exchange, through the token I/O interface 126, with outside, such as the PC 10.

The token microprocessor 122 may execute security functions, in order to protect an access to information managed through and/or by the token 12.

The security functions may include a user authentication process to be used, in order to access, for example, data relating to the application stored within the token memory 124.

To authenticate the user, the token 12 may store an application for verifying a Personal Identity Number (or PIN), a fingerprint or the like, as user authentication data. User authentication data is securely stored within the token 12 and to be input by the token 12 user during a configuration phase.

The token 12 compares the input data with the stored user authentication data and, if the input data matches the stored user authentication data, then the token 12 authorizes to go further within an invention process for accessing an application. Otherwise, the token 12 forbids or blocks an execution of the application by the PC 10.

The application originating from the token and to be installed onto the PC 10 is preferably an autorun type application, i.e. associated with data allowing the host device to install the application without user involvement.

The token memory 124 stores preferably part or all the following information, data for identifying an application, data for authenticating the application, data for identifying the token 12, data for authenticating the token 12, a file, such as a file termed "autorun.inf". The file contains a set of instructions relating to the application.

As data for authenticating the application, it may be a signature of the application, as a result of secret data that is to be used as an entry of an algorithm, such as a Data Encryption Standard (or DES) or a triple DES, and at least some instructions and their parameters of a program relating to the application, as part of the executable data of the application, as another entry of the algorithm. The token memory 124 stores, besides references of the instructions and the parameters of the program that are used as an entry by the algorithm, the secret data and the concerned algorithm, so as to generate the signature of the application.

As data for authenticating the application, it may be a binary thumbprint. The binary thumbprint is a result of secret data that is to be used as an entry of an algorithm, such as a hash function, and at least some instructions and their parameters of a program relating to the application, as part of the executable data of the application, as another entry of the algorithm. The binary thumbprint is preferably included within the executable data relating to the application.

The file may include, besides a set of instructions, part or all the following information: data for identifying an application, data for authenticating the application, data for identifying the token 12 and/or data for authenticating the token 12.

The instruction set of the file allows initiating an installation of the application from the token 12 to the PC 10. Such an application installation is performed in a transparent manner for the PC user. In other words, the PC 10 user is not involved for installing the application. The installation of the application is therefore automatic.

Within the present description, the installation of the application is a loading of the application onto the host PC memory from the token memory 124, so that the application may be executed by the host PC microprocessor.

The application is identified by an Application IDentifier (or AID), a Globally Unique IDentifier (or GUID), an application name and/or an application alias, as identification data for identifying the application.

The token 12 is identified by a token serial number, a product identifier and/or a seller identifier, as identification data relating to the token 12.

The token 12 may store within its memory 124, for example, a Subscriber Identity Module (or SIM) application for a Global System for Mobile communications (or GSM) network, a Universal Subscriber Identity Module (or USIM) for a Universal Mobile Telecommunications System (or UMTS) network, a Code Division Multiple Access (or CDMA) Subscriber Identity module (or CSIM) for a CDMA network, a Removable User Identity Module (or RUIM) for GSM, UMTS and CDMA networks and/or an Internet protocol multimedia Services Identity Module (or ISIM) for IP Multimedia Subsystem (or IMS).

Naturally, the just aforementioned list is not exhaustive but only for exemplifying purposes and is not considered to reduce the scope of the present invention.

The token 12 is preferably able to transmit to the PC 10 data relating to the file containing the set of instructions, such as a file termed "autorun.inf", and relating to the application. The file includes identification data relating to the application, and preferably authentication data relating to the application, identification data relating to the token and/or authentication data relating to the token.

The token 12 may be able to initiate actions, in order to interact directly, in an independent manner of the PC 10, with the outside world, such as the PC 10 itself. Such an interaction capacity at the initiative of the token 12 is also known as proactive capacity. The proactive capacity may be used to automatically send to the host PC 10, data stored within the token memory 124. As data stored within the token memory 124, it may be data for identifying an application, a key for authenticating the application, data for identifying the token 12, a key for authenticating the token 12 and/or other data.

The PC 10 includes at least one microprocessor (not represented), at least one memory (not represented) and at least one Input/Output (or I/O) interface (not all represented).

The PC I/O interface includes one or several interfaces, so as to exchange data between the PC 10 and the token 12.

The PC I/O interface(s) with the token 12 may include a USB type interface, an ISO 7816 type interface, as a contact interface, when the token 12 is plugged onto the PC 10.

The PC I/O interface(s) with the token 12 may comprise a wireless USB type interface, a Bluetooth interface, a Wifi interface, an ISO 14 443 type interface, as a contact-less interface, when the token 12 is outside of the PC 10.

The PC memory stores an Operating System (or OS) and data. The PC memory may also store one or several applications.

The PC microprocessor processes data originating from either the PC memory or through the PC I/O interface.

The PC I/O interface comprises preferably a display screen 102 and a keyboard 104.

The display screen 102 and the keyboard 104, as a Man Machine Interface (or MMI), may be used for exchanging information between the PC user, the PC 10 and/or another entity(ies) to which the PC 10 is connected, like, in particular, the token 12.

The PC I/O interface may comprise one or several antennas (not represented).

One PC antenna may be arranged to let communicate, through a short range radio-frequency link 11, notably the PC 10 and the token 12.

Preferably, the PC OS, besides its capacity for installing an application originating from the PC memory, includes an algorithm relating to an invention method for accessing an application. According to another embodiment, instead of the PC OS, a dedicated application integrates an algorithm relating to an invention method for accessing an application that is further infra described in relation with the figure 2.

According to one invention feature, the PC memory stores a list of one authorized identified application(s), as a first white reference list with which an application that may be executed is compared, so as to know whether the application is authorized (or not) to be executed. The application is executed only when the application that is requested to be executed belongs to the first white reference list.

According to an alternative, the PC memory stores a list of one forbidden identified application(s), as a first black reference list with which an application that may be executed is compared, so as to know whether the application is forbidden (or not) to be executed. The application is executed only when the application that is requested to be executed does not belong to the first black reference list.

Preferably, the PC memory also stores a list of one authorized identified token(s), as a second white reference list with which an application that may be executed is associated, so as to know whether the token that issues the application is authorized (or not). The application is executed only when the token that provides the associated application belongs to the second white reference list.

Alternately, the PC memory stores a list of one forbidden identified token(s), as a second black reference list with which an application that may be executed is not associated, so as to know whether the token that issues the application is forbidden (or not). The application is executed only when the token that provides the associated application does not belong to the second black reference list.

The PC 10 is arranged to analyse whether at least one condition is satisfied or not before running or not the application.

To carry out this analysis for authenticating the application and/or the token 12, the PC memory stores needed secret data and authentication algorithms used by the token 12, so that the PC 10 determines data for authenticating the application and/or data for authenticating the token 12 respectively.

If the analysed condition(s) is(are) satisfied, then the PC 10 authorizes to execute the application supported by the token 12.

Figure 2 shows one example of a sequence 20 of steps that is implemented by the PC 10 and the token 12, so as to allow or not to let the PC user benefit from a service offered by the token 12.

It is assumed that the PC user connects physically the token 12 to the PC 10.

According to another embodiment, the PC user brings the token 12 close to the PC 10, so that the token 12 and the PC 10 exchanges data in a wireless manner, for example, through a short radio range frequency link or an infra red link.

Optionally, the PC 10 detects whether the token 12 is coupled to the PC 10. When the PC 10 detects that the token 12 is coupled to the PC 10, the PC 10 goes on with its processing.

It is further assumed that the PC 10 analyses, according to the invention, whether four additional conditions are respected before executing possibly the application supported by the token 12.

It is further assumed that a token supplier has provided the PC 10 with needed secret data and authentication algorithms used by the token 12 so as to authenticate the application and the token 12. The PC 10 is thus able to generate a reference result for authenticating the application and a reference result for authenticating the token 12 respectively.

Firstly, the token 12 transmits 22 to the PC 10 data relating to the application preferably accompanied with data relating to the token 12 itself.

Then, the PC 10 analyses 24 whether identification data relating to the application received from the token 12 is included within a list of an authorized identified application(s).

If the identification data relating to the application is not a list member, then the PC 10 forbids 26 to execute the application preferably by not installing the application.

If, after having compared to at least a first list member, the identification data relating to the application matches an application identifier record of the list, then the PC 10 authorizes to carry on with processing the data provided by the token 12.

Then, the PC 10 analyses 28 whether the application is authenticated after having determined a reference result for authenticating the application.

If the application is not authenticated, then the PC 10 forbids 26 to execute the application preferably by not installing the application.

If the data for authenticating the application supplied by the token 12 matches the reference result for authenticating the application, then the PC 10 authorizes to go to a next step 210.

Then, the PC 10 analyses 210 whether identification data relating to the token 12 and supplied by the token 12 is included within a list of an authorised token(s).

If the identification data relating to the token 12 is not a list member, then the PC 10 forbids 26 to execute the application.

If, after having compared to at least a first list member, the identification data relating to the token 12 matches a token identifier record of the list, then the PC 10 allows to continue with processing the data provided by the token 12.

Then, the PC 10 analyses 212 whether the token is authenticated after having determined a reference result for authenticating the token.

If the token is not authenticated, then the PC 10 forbids 26 to execute the application.

Otherwise, i.e. if the data for authenticating the token supplied by the token 12 matches the reference result for authenticating the token, then the PC 10 authorizes to execute the application.

The PC 10 identifies and authenticates therefore the application and the associated token before the PC 10 runs 214 the application.

A lot of amendments of the embodiment described supra may be brought without departing from the invention spirit. For example, a count of the conditions to be satisfied may be increased or reduced with respect to the stated ones and/or the used algorithms may be, according to a desired security level, easier or more complicated than the described ones. As another example, instead of a single sending of information to be analysed at least in part, the PC 10 receives the information items, namely data for identifying the application, data for authenticating the application, data for identifying the token, data for authenticating the token as the process goes along, i.e. one corresponding information item before each analysis.

The invention allows a user of a host computer to benefit, in a secure and user-friendly manner, from an application that originates from a peripheral device connected to the computer.

## Claims

1. A method (20) for accessing an application,
a token (12) comprising at least one application that is executable by a device (10), the token being coupled to the device,
**characterized in that** the method comprises the following steps:
- the token sends (22) to the device identification data relating to the application,
- the device analyses (24) whether the identification data relating to the application is included within a list of at least one authorized application,
- only if the identification data relating to the application is included within a list of at least one authorized application, then the device executes (214) the application.

2. Method according to claim 1, wherein, before executing the application, the device further verifies that the application is authenticated.

3. Method according to claim 1 or 2, wherein, before executing the application, the method further comprises the following steps:
- the token sends (22) to the device identification data relating to the token,
- the device analyses (210) whether the identification data relating to the token is included within a list of at least one authorized token,
- only if the identification data relating to the token is included within a list of at least one authorized token, then the device executes the application.

4. Method according to claim 3, wherein, before executing the application, the device further verifies that the token is authenticated.

5. Method according to any of claims 1 to 4, wherein, before executing the application, the device further verifies that executable data relating to the application includes a binary thumbprint.

6. Method according to any of the claims 1 to 5, wherein the token is an element of a group comprising:
- a Universal Serial Bus type token;
- a card;
- a smart card;
- a Subscriber Identity Module type card.

7. Method according to any of the claims 1 to 6, wherein the application comprises an autorun type application.

8. Method according to claim 3, wherein the identification data relating to the token includes at least one element of a group comprising:
- a token serial number;
- a product identifier;
- a seller identifier.

9. A device (10) for accessing an application, a token (12) being likely to be coupled to the device, the token comprising at least one application that is executable by the device,
**characterized in that** the device is adapted to:
- receive identification data relating to the application;
- analyse (24) whether the identification data relating to the application is included within a list of at least one authorized application; and
- execute (214) the application, only if the identification data relating to the application is included within a list of at least one authorized application.

10. Device according to claim 9, wherein the device includes at least one element of a group comprising:
- a mobile handset;
- a mobile phone;
- a smart phone;
- a Personal Digital Assistant;
- a Personal Computer;
- a set-top box;
- a desktop computer;
- a portable computer;
- a netbook;
- a tablet computer;
- a media player;
- a Global Positioning System receiver.
